# EUROPÄISCHE PATENTSCHRIFT

(11) **EP 1 804 352 B1**
(45) Veröffentlichungstag und Bekanntmachung des Hinweises auf die Patenterteilung: **17.08.2011**
(21) Anmeldenummer: 06023440.8
(22) Anmeldetag: 10.11.2006
(51) Int. Cl.: H02G 3/12, H02G 3/18

(54) **Elektrisches/elektronisches Installationsgerät**
Electric or electronic installation apparatus
Appareillage d'installation électrique ou électronique

(30) Priorität: 27.12.2005 DE 102005062493
(43) Veröffentlichungstag der Anmeldung: 04.07.2007
(73) Patentinhaber: Albrecht Jung GmbH & Co. KG, 58579 Schalksmühle (DE)
(72) Erfinder: Ullrich, Konrad, Dipl.-Ing., 58339 Breckerfeld (DE)

(56) Entgegenhaltungen:
- DE-A1- 3 228 348
- DE-A1- 10 020 216
- GB-A- 1 397 562

## Beschreibung

Die vorliegende Erfindung geht von einem gemäß Oberbegriff der beiden Hauptansprüche konzipierten elektrischen/elektronischen Installationsgerät aus.

Derartige elektrische/elektronische Installationsgeräte sind in der Regel dafür vorgesehen, eine Vielzahl von in Gebäuden installierten Aktoren (Jalousieantriebe, Beleuchtungseinrichtungen, Fühler, Wächter usw.) bedarfsgerecht zu beeinflussen. Zu diesem Zweck sind die unterschiedlichsten Installationseinrichtungen, wie Schalter, Taster, Dimmer usw. bekannt geworden. Damit die hochwertigen Funktionsteile solcher elektrischen/elektronischen Installationsgeräte nicht von Unbefugten auf einfache Art und Weise demontiert werden können, sind diese mit Abziehschutzeinrichtungen gesichert.

Durch die GB 1 397 562 A ist ein dem Oberbegriff des Hauptanspruches entsprechendes elektrisches/elektronisches Installationsgerät für die Gebäudesystemtechnik bekannt geworden. Dieses elektrische/elektronische Installationsgerät für die Gebäudesystemtechnik weist ein von einem Gehäuse aufgenommenes Funktionsmodul auf, wobei das Gehäuse unter Zuhilfenahme eines Tragrings an einer Installationsdose festlegbar ist und wobei das Funktionsmodul zur Verhinderung einer unbefugten Demontage mittels einer Abziehschutzeinrichtung gesichert ist. Das Funktionsmodul ist fest mit dem Gehäuse verbunden und die Abziehschutzeinrichtung weist zumindest ein Sperrelement auf, welches kraft- und/oder formschlüssig an einem Sperranschlag zur Anlage kommt, der an den Tragring angeformt ist.

Des weiteren ist durch die DE 100 20 216 A1 ein elektrisches/elektronisches Installationsgerät bekannt geworden, welches ein von einem Gehäuse aufgenommenes Funktionsmodul aufweist und welches unter Zuhilfenahme eines Tragrings an einer Installationsdose festlegbar ist. Zur Verhinderung einer unbefugten Demontage ist eine Abziehschutzeinrichtung vorgesehen. Das hochwertige Funktionsmodul kann also nicht auf einfache Art und Weise entfernt werden. Eine solche Abziehschutzeinrichtung ist jedoch recht komplex zu handhaben und besteht aus mehreren relativ filigran ausgeführten Teilen, so dass bei einer leicht erhöhten Krafteinwirkung eine Zerstörung der Abziehschutzeinrichtung eintreten kann.

Zudem ist durch die DE 32 28 348 A1 ein elektrisches/elektronisches Installationsgerät der Gebäudesystemtechnik bekannt geworden, bei dem das Sperrelement an das Gehäuse angeformt ist.

Ausgehend von derart ausgebildeten elektrischen/elektronischen Installationsgeräten liegt der vorliegenden Erfindung die Aufgabe zugrunde, ein Installationsgerät mit einer Abziehschutzeinrichtung zu schaffen, die besonders robust ausgeführt ist und einen wesentlich höheren Widerstand gegen einen unbefugten Demontageversuch auch mit größerer Krafteinwirkung bietet.

Erfindungsgemäß wird diese Aufgabe jeweils durch die in den beiden Hauptansprüchen angegebenen Merkmale gelöst.

Bei einer solchen Ausbildung ist besonders vorteilhaft, dass die Abziehschutzeinrichtung erst nach der Installation des Funktionsmoduls auf besonders einfache und sichere Art und Weise in ihre Wirkstellung gebracht wird, so dass insgesamt eine besonders einfache Installation möglich ist.

Weitere vorteilhafte Ausgestaltungen des erfindungsgemäßen Gegenstandes sind in den Unteransprüchen angegeben. Anhand eines Ausführungsbeispiels sei die Erfindung im Prinzip näher erläutert, dabei zeigt:
- Fig. 1:: prinziphaft ein solches elektrisches/elektronisches Installationsgerät in Explosionsdarstellung;
- Fig. 2:: prinziphaft eine Schrägansicht des elektrischen/elektronischen Installationsgeräts, als Ausschnitt in vergrößerter Darstellung, wobei sich das Sperrelement in seiner Freigabestellung befindet;
- Fig. 3:: prinziphaft eine Schrägansicht des elektrischen/elektronischen Installationsgeräts, als Ausschnitt in vergrößerter Darstellung, wobei sich das Sperrelement in seiner Sperrstellung befindet.

Wie aus den Figuren hervorgeht, besteht ein solches elektrisches/elektronisches Installationsgerät für die Gebäudesystemtechnik hauptsächlich aus einem Funktionsmodul 1, das von einem Gehäuse 2 aufgenommen ist. Das Gehäuse 2 ist von einem Tragring 3 umgeben. Über den Tragring 3 wird das elektrische/elektronische Installationsgerät an einer Installationsdose D festgelegt.

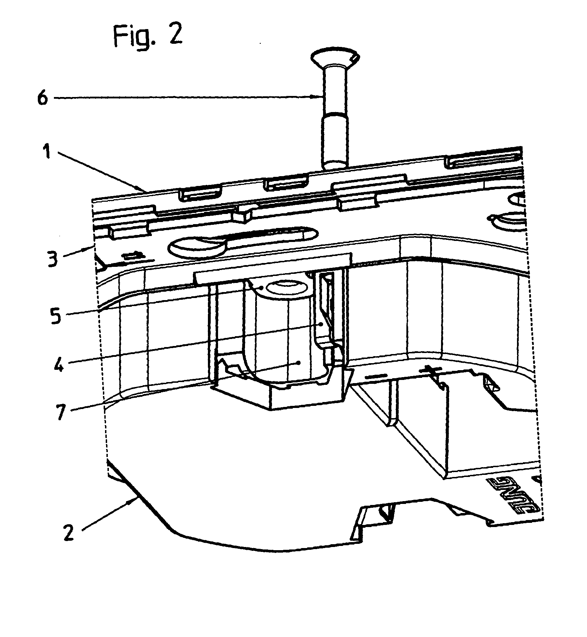

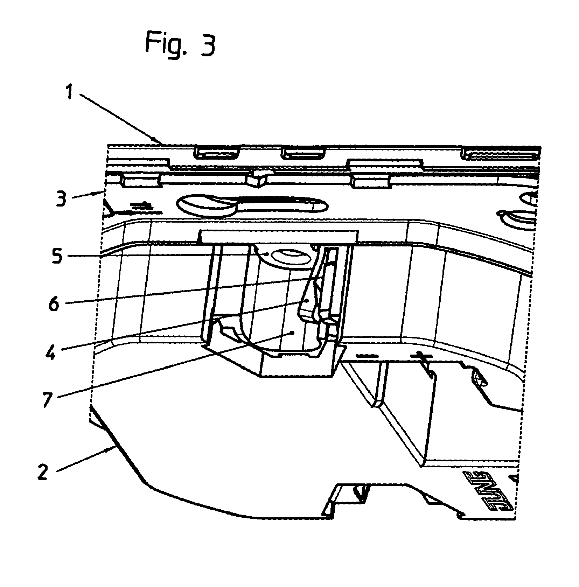

Wie des weiteren aus den Figuren hervorgeht, ist das hochwertige Funktionsmodul 1 fest mit dem Gehäuse 2 verbunden. Als Abziehschutzeinrichtung ist ein gelenkig an das Gehäuse 2 angeformtes Sperrelement 4 vorgesehen. Das Sperrelement 4 kann ausgehend von der in Figur 2 dargestellten Freigabestellung durch ein als Schraube ausgebildetes Treibmittel 6 in die in Figur 3 dargestellte Sperrstellung gebracht werden.

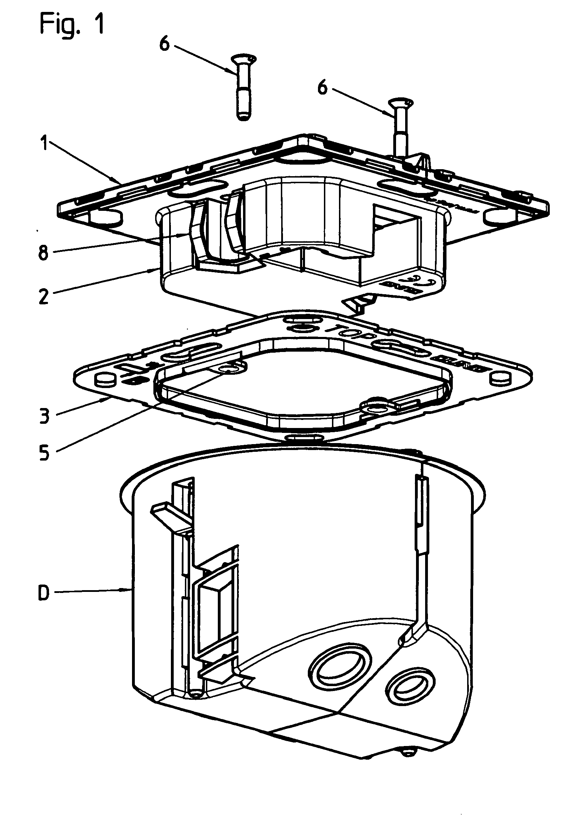

Wie insbesondere aus Figur 1 hervorgeht, weist der Tragring 3 einen angeformten, zungenartig ausgebildeten Sperranschlag 5 auf, an dem das Sperrelement 4 in seiner Sperrstellung kraft- und/oder formschlüssig zur Anlage kommt. Das hochwertige Funktionsmodul 1 ist somit besonders sicher gegen eine unbefugte Demontage geschützt. Der Sperranschlag 5 des Tragrings 3 greift in eine in das Gehäuse 2 eingeformte Aufnahmezone 7 ein, an die zugleich auch das Sperrelement 4 angeformt ist. Sowohl das Sperrelement 4 als auch der Sperranschlag 5 weisen jeweils eine robuste, auch größeren Krafteinwirkungen widerstehende Ausbildung auf. Somit ist eine besonders robust ausgeführte Abziehschutzeinrichtung entstanden, die einen besonders hohen Widerstand gegen unbefugte Demontageversuche bietet. Die Handhabung der Abziehschutzeinrichtung ist vergleichsweise einfach, weil diese lediglich über das als Schraube ausgebildete Treibmittel 6 betätigt werden muss, was insgesamt eine besonders einfache Montage des elektrischen/elektronischen Installationsgerätes ermöglicht. Vorteilhafterweise ist die Abziehschutzeinrichtung mit ihren Komponenten elektrisch isolierend ausgeführt.

Um eine auch größeren Krafteinwirkungen widerstehende Abziehschutzeinrichtung zu schaffen, kann das Sperrelement auch kraft- und/oder formschlüssig mit einer Haltefeder 8 des elektrischen/elektronischen Installationsgerätes zusammenwirken. Durch das Sperrelement 4 wird dann in dessen Sperrstellung die Ausweichmöglichkeit der mit dem Tragring 3 zusammenwirkenden Haltefeder 8 blockiert. Das hochwertige Funktionsmodul 1 ist somit besonders sicher gegen eine unbefugte Demontage geschützt.

## Patentansprüche

1. Elektrisches/elektronisches Installationsgerät der Gebäudesystemtechnik mit einem vom einem Gehäuse aufgenommenen Funktionsmodul, wobei das Gehäuse unter Zuhilfenahme eines Tragrings an einer Installationsdose festlegbar ist, und wobei das Funktionsmodul zur Verhinderung einer unbefugten Demontage mittels einer Abziehschutzeinrichtung gesichert ist, **dadurch gekennzeichnet, dass** das Funktionsmodul (1) fest mit dem Gehäuse (2) verbunden ist, und dass die Abziehschutzeinrichtung zumindest ein einstückig an das Gehäuse (2) angeformtes Sperrelement (4) aufweist, welches kraft- und/oder formschlüssig an einer, mit dem Tragring (3) zusammenwirkenden Haltefeder (8) zur Anlage kommt.

2. Elektrisches/elektronisches Installationsgerät nach Anspruch 1, **dadurch gekennzeichnet, dass** zumindest ein Sperrelement (4) federelastisch an das Gehäuse (2) angeformt ist.

3. Elektrisches/elektronisches Installationsgerät nach Anspruch 1 oder 2,
**dadurch gekennzeichnet, dass** das zumindest ein Sperrelement (4) gelenkig an das Gehäuse (2) angeformt ist.

4. Elektrisches/elektronisches Installationsgerät nach einem der Ansprüche 1 bis 3, **dadurch gekennzeichnet, dass** zumindest einem Sperrelement (4) ein die Sperrwirkung erzeugendes Treibmittel (6) zugeordnet ist.

5. Elektrisches/elektronisches Installationsgerät nach einem der Ansprüche 1 bis 4, **dadurch gekennzeichnet, dass** zumindest einem Sperrelement (4) ein die Sperrwirkung erhöhendes Treibmittel (6) zugeordnet ist.

6. Elektrisches/elektronisches Installationsgerät nach Anspruch 4 oder 5,
**dadurch gekennzeichnet, dass** zumindest ein Treibmittel (6) als Stift ausgebildet ist.

7. Elektrisches/elektronisches Installationsgerät nach Anspruch 4 oder 5,
**dadurch gekennzeichnet, dass** zumindest ein Treibmittel (6) als Keil ausgebildet ist.

8. Elektrisches/elektronisches Installationsgerät nach Anspruch 4 oder 5,
**dadurch gekennzeichnet, dass** zumindest ein Treibmittel (6) als Schraube ausgebildet ist.

9. Elektrisches/elektronisches Installationsgerät nach einem der Ansprüche 1 bis 8, **dadurch gekennzeichnet, dass** zumindest ein an den Tragring (3) angeformter Sperranschlag (5) zungenartig ausgebildet ist, und dass der zungenartig ausgebildete Sperranschlag (5) in eine in das Gehäuse (2) eingeformte Aufnahmezone (7) eingreift, an welche zudem zumindest ein Sperrelement (4) angeformt ist.

## Claims

1. Electrical/electronic installation device for use in building system engineering having a functional module accommodated in a housing, for which purpose the housing is capable of being fixed in place in an installation box with the aid of a supporting ring and the functional module is secured by means of a withdrawal protection facility so as to prevent its unauthorised removal, **characterised in that** the functional module (1) is securely attached to the housing (2) and that the withdrawal protection facility features at least one locking member (4) which is integrally moulded onto the housing (2) and comes to rest in an interlocking and/or non-positive manner at a retention spring (8) that interacts with the supporting ring (3).

2. Electrical/electronic installation device in accordance with Claim 1, **characterised in that** at least one locking member (4) is integrally moulded onto the housing (2) in a resilient manner.

3. Electrical/electronic installation device in accordance with Claim 1 or Claim 2, **characterised in that** the at least one locking member (4) is integrally moulded onto the housing (2) in a hinged manner.

4. Electrical/electronic installation device in accordance with any of Claims 1 to 3, **characterised in that** a motive agent (6) generating the locking action is assigned to at least one locking member (4).

5. Electrical/electronic installation device in accordance with any of Claims 1 to 4, **characterised in that** a motive agent (6) intensifying the locking action is assigned to at least one locking member (4).

6. Electrical/electronic installation device in accordance with Claim 4 or Claim 5, **characterised in that** at least one motive agent (6) is devised as a pin.

7. Electrical/electronic installation device in accordance with Claim 4 or Claim 5, **characterised in that** at least one motive agent (6) is devised as a wedge.

8. Electrical/electronic installation device in accordance with Claim 4 or Claim 5, **characterised in that** at least one motive agent (6) is devised as a screw.

9. Electrical/electronic installation device in accordance with any of Claims 1 to 8, **characterised in that** at least one locking catch (5) moulded onto the supporting ring (3) is of a tongue-like design and that the locking catch (5) of a tongue-like design engages in a receiving zone (7) which is integrally moulded into the housing (2) and on which, additionally, at least one locking member (4) is moulded.

## Revendications

1. Appareil d'installation électrique/électronique relevant des installations techniques systémiques des bâtiments et de la domotique, comportant un module de fonction accueilli par un boîtier, le boîtier pouvant être fixé à une boîte d'installation à l'aide d'un anneau support, et le module de fonction étant bloqué à l'aide d'un dispositif de protection en empêchant le retrait, afin d'éviter un démontage inhabilité, **caractérisé en ce que** le module de fonction (1) est relié de manière fixe au boîtier (2) et **en ce que** le dispositif empêchant le retrait présente au moins un élément de blocage (4) formé d'une seule pièce sur le boîtier (2), l'élément de blocage venant s'appuyer par adhérance et/ou par complémentarité de forme à un ressort de retenue et de maintien (8) agissant avec l'anneau support (3).

2. Appareil d'installation électrique/électronique selon la revendication 1, **caractérisé en ce que** au moins un élément de blocage (4) est formé de manière élastique sur le boîtier (2).

3. Appareil d'installation électrique/électronique selon la revendication 1 ou 2, **caractérisé en ce que** au moins un élément de blocage (4) est formé avec une rotule sur le boîtier (2).

4. Appareil d'installation électrique/électronique selon l'une des revendications 1 à 3, **caractérisé en ce que** est attribué à au moins un élément de blocage (4) un élément de propulsion (6) générant l'effet de blocage.

5. Appareil d'installation électrique/électronique selon l'une des revendications 1 à 4, **caractérisé en ce que** est attribué à au moins un élément de blocage (4) un élément de propulsion (6) augmentant l'effet de blocage.

6. Appareil d'installation électrique/électronique selon la revendication 4 ou 5, **caractérisé en ce que** au moins un élément de propulsion (6) est réalisé sous forme de goupille.

7. Appareil d'installation électrique/électronique selon la revendication 4 ou 5, **caractérisé en ce que** au moins un élément de propulsion (6) est réalisé sous forme de coin.

8. Appareil d'installation électrique/électronique selon la revendication 4 ou 5, **caractérisé en ce que** au moins un élément de propulsion (6) est réalisé sous forme de vis.

9. Appareil d'installation électrique/électronique selon l'une des revendications 1 à 8, **caractérisé en ce que** au moins une butée de blocage (5) formée sur l'anneau support (3) est réalisée en forme de languette et que la butée de blocage (5) réalisée en forme de languette prend dans une zone d'accueil (7) ménagée dans le boîtier (2), zone d'accueil sur laquelle est formée de plus au moins un élément de blocage (4).
